# EUROPEAN PATENT APPLICATION

(11) **EP 4 428 208 A1**
(43) Date of publication of application: **11.09.2024**
(21) Application number: 23822771.4
(22) Date of filing: 14.04.2023
(51) Int. Cl.: C09J 127/14, C08F 114/22, C08F 14/22, C08F 214/22

(54) **BINDER COMPOSITION, POSITIVE ELECTRODE PLATE, SECONDARY BATTERY, AND ELECTRIC APPARATUS**

(30) Priority: 16.06.2022 WO PCT/CN2022/099187; 30.08.2022 CN 202211044631; 30.08.2022 CN 202211052014; 30.08.2022 CN 202211046282
(71) Applicant: Contemporary Amperex Technology Co., Limited, Ningde, Fujian 352100 (CN)
(72) Inventor: LI, Cheng, Ningde, Fujian 352100 (CN); ZENG, Zipeng, Ningde, Fujian 352100 (CN); LIU, Huihui, Ningde, Fujian 352100 (CN); WANG, Jingming, Ningde, Fujian 352100 (CN)
(74) Representative: Kraus & Lederer PartGmbB
(86) International application number: PCT/CN2023/088502
(87) International publication number: WO 2023/241200

(57) **Abstract**

This application provides a binder composition. The binder composition includes a first fluoropolymer and a second fluoropolymer, where the first fluoropolymer includes polyvinylidene fluoride with a weight-average molecular weight of 1,500,000-5,000,000, and a weight-average molecular weight of the second fluoropolymer does not exceed 600,000. The binder composition has good processability, achieves high adhesion force for the electrode plate when added in small amounts, and improves the cycling performance of the battery.

## Description

### CROSS-REFERENCE TO RELATED APPLICATIONS

This application refers to PCT Patent Application No. PCT/CN2022/099187, filed on June 16, 2022 and entitled "BINDER AND PREPARATION METHOD AND APPLICATION THEREOF", CN Patent Application No. 202211044631.4, filed on August 30, 2022 and entitled "FLUOROPOLYMER AND PREPARATION METHOD AND USAGE THEREOF, POSITIVE ELECTRODE SLURRY, SECONDARY BATTERY, BATTERY MODULE, BATTERY PACK, AND ELECTRIC APPARATUS", CN Patent Application No. 202211052014.9, filed on August 30, 2022 and entitled "FLUOROPOLYMER AND PREPARATION METHOD AND USAGE THEREOF, POSITIVE ELECTRODE SLURRY, SECONDARY BATTERY, BATTERY MODULE, BATTERY PACK, AND ELECTRIC APPARATUS", and CN Patent Application No. 202211046282.X, filed on August 30, 2022 and entitled "BINDER, PREPARATION METHOD, POSITIVE ELECTRODE PLATE, SECONDARY BATTERY, AND ELECTRIC APPARATUS", which are incorporated herein by reference in their entirety.

### TECHNICAL FIELD

The application relates to the field of secondary battery technologies, and in particular, to a binder, a preparation method, a positive electrode plate, a secondary battery, a battery module, a battery pack, and an electric apparatus.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the extensive application of secondary batteries, higher requirements are imposed on their cycling performance, service life, and the like.

As a commonly used material in secondary batteries, the binder is in great need at electrode plates, separators, packaging places, and the like of batteries. However, existing binders present low adhesion and often need to be added in large amounts to meet the adhesion force requirements of electrode plates. This limits the increase of the energy density of batteries. Therefore, the existing binders still need to be improved.

### SUMMARY

In view of the foregoing subject, this application is intended to provide a binder. The binder can provide excellent adhesion force at low addition amounts and has good processability.

To achieve the foregoing objective, this application provides a binder. The binder includes a first fluoropolymer and a second fluoropolymer, where a weight-average molecular weight of the first fluoropolymer is 1,500,000-5,000,000, and a weight-average molecular weight of the second fluoropolymer does not exceed 600,000.

Even added in small amounts, this binder can ensure that the electrode plate has sufficient adhesion force, improving the cycling performance of a battery.

In any embodiment, a mass percentage of the second fluoropolymer is 0.1%-10% based on total mass of the binder composition.

With a mass ratio of the first fluoropolymer to the second fluoropolymer controlled within an appropriate range, the binder at low addition amounts can ensure that the electrode plate has excellent adhesion force, improving the capacity retention of the battery during cycling. The crystallinity and processability of the binder can be effectively improved by adding a small amount of the second fluoropolymer to the first fluoropolymer, thereby reducing the manufacturing cost and further improving the cycling performance of the battery.

In any embodiment, crystallinity of the binder composition is not higher than 45%, and optionally is 15%-45%.

The addition of the second fluoropolymer to the first fluoropolymer can effectively reduce the crystallinity of the binder and improve the flexibility of the electrode plate.

In any embodiment, the first fluoropolymer contains a structural unit derived from vinylidene fluoride.

In any embodiment, the first fluoropolymer further contains a structural unit shown in formula I, 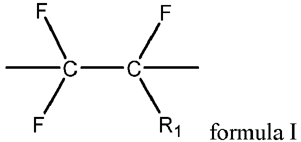 where R₁ includes one or more of hydrogen, fluorine, chlorine, and trifluoromethyl.

In any embodiment, a polydispersity coefficient of the first fluoropolymer is 1.5-2.5, optionally 2-2.3.

With the polydispersity coefficient of the first fluoropolymer falling within an appropriate range, the electrode plate can have excellent adhesion force, improving the capacity retention of the battery during cycling. In addition, the proper polydispersity coefficient of the first fluoropolymer can effectively improve the solid content of the slurry and reduce the production costs.

In any embodiment, crystallinity of the first fluoropolymer is 34%-48%, optionally 40%-48%.

In any embodiment, viscosity of a colloidal solution containing 4% by mass of the first fluoropolymer, prepared by dissolving the first fluoropolymer in N-methylpyrrolidone, is 2400 MPa s to 5000 MPa s, optionally 3500 MPa s to 5000 MPa s.

During preparation of a positive electrode slurry, the binder needs to have a certain viscosity to prevent the settling of the positive electrode active material, conductive agent, and other additives, allowing the slurry to be placed more stably. In the prior art, achieving a viscosity of colloidal solution of 2,400 MPa s to 5,000 MPa s requires at least a binder content of 7% by mass, based on mass of the colloidal solution. The first fluoropolymer in this application can achieve the expected viscosity of colloidal solution with a usage amount of 4%, providing a foundation for reducing the content of the binder in the positive electrode film layer.

In any embodiment, the first fluoropolymer includes one or more of polyvinylidene fluoride, vinylidene fluoride-chlorotrifluoroethylene copolymer, vinylidene fluoride-hexafluoropropylene copolymer, vinylidene fluoride-chlorotrifluoroethylene-hexafluoropropylene copolymer, vinylidene fluoride-tetrafluoroethylene-hexafluoropropylene copolymer, and vinylidene fluoride-chlorotrifluoroethylene-tetrafluoroethylene-hexafluoropropylene copolymer.

In any embodiment, the second fluoropolymer contains a structural unit shown in formula II, 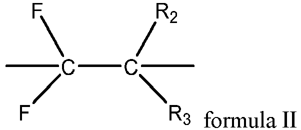 where R₂ and R₃ each independently include at least one of hydrogen, halogen, or a C₁₋₃ alkyl group containing at least one fluorine atom.

In any embodiment, R₂ and R₃ each independently include at least one of hydrogen, fluorine, chlorine, or trifluoromethyl.

In any embodiment, a terminal group of the second fluoropolymer contains a hydroxyl group or an ester group.

The second fluoropolymer has a small weight-average molecular weight, and the terminal group has a high mass content in it, so the terminal group has great influence on the performance of the second fluoropolymer. The terminal group of the second fluoropolymer contains a hydroxyl group or an ester group, which can effectively improve the adhesion of the second fluoropolymer and reduce the decrease in adhesion performance of the electrode plate caused by addition of the second fluoropolymer.

In any embodiment, a weight-average molecular weight of the second fluoropolymer is 5000-600,000.

In any embodiment, the second fluoropolymer includes one or more of polytetrafluoroethylene, polyvinylidene fluoride, poly(vinylidene fluoride-hexafluoropropylene) copolymer, poly(vinylidene fluoride-tetrafluoroethylene) copolymer, poly(vinylidene fluoride-chlorovinylidene fluoride) copolymer, and poly(vinylidene fluoride-tetrafluoroethylene-hexafluoropropylene) copolymer.

A second aspect of this application provides a preparation method of binder composition, including: preparing a first fluoropolymer: under a polymerizable condition, subjecting a raw material containing vinylidene fluoride monomer to a first polymerization reaction to prepare the first fluoropolymer, where a weight-average molecular weight of the first fluoropolymer is 1,500,000 to 5,000,000; preparing a second fluoropolymer: under a polymerizable condition, subjecting a fluorine-containing monomer to a second polymerization reaction to prepare the second fluoropolymer, where a weight-average molecular weight of the second fluoropolymer does not exceed 600,000; and blending: blending the first fluoropolymer and the second fluoropolymer to prepare a binder composition.

In any embodiment, the preparation method of the first fluoropolymer specifically includes:
in a non-reactive gas atmosphere, subjecting the raw material containing vinylidene fluoride monomer to the first polymerization reaction for 6 hours to 12 hours at a reaction pressure of 6 MPa to 8 MPa and a reaction temperature of 45°C to 60°C; and
adding a chain transfer agent, and when pressure in a reaction system drops to 2 MPa to 2.5 MPa, stopping the reaction, implementing solid-liquid separation, and retaining solid phase to obtain the first fluoropolymer.

In any embodiment, the preparation method of the second fluoropolymer specifically includes:
in a non-reactive gas atmosphere, subjecting at least one monomer shown in formula III to the second polymerization reaction for 0.5 hour to 8 hours at a reaction pressure of 0.1 MPa to 5 MPa and a reaction temperature of 60°C to 90°C, stopping the reaction, implementing solid-liquid separation, and retaining solid phase to obtain the second fluoropolymer, 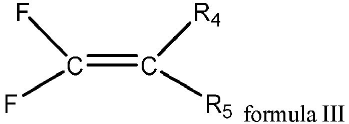
where R₄ and R₅ each independently include at least one of hydrogen, halogen, or a C₁₋₃ alkyl group containing at least one fluorine atom.

In any embodiment, the second polymerization reaction further includes the following steps:
adding a solvent and a dispersant into a container, and filling the container with non-reactive gas; and
adding the monomer shown in formula III, heating to 60°C to 90°C, and adding a second initiator and a chain transfer agent to trigger the second polymerization reaction.

In any embodiment, the second initiator contains an inorganic peroxide which may be selected from potassium persulfate or ammonium persulfate.

The test results of nuclear magnetic resonance show that when inorganic peroxide is used as the initiator, the terminal group in the second fluoropolymer includes -CF₂-CH₂OH or -CF₂-CH₂OOCCH₃. The existence of the hydroxyl group and ester group in the terminal group can effectively improve the adhesion of the second fluoropolymer and reduce the decrease in adhesion performance of the binder composition caused by addition of the second fluoropolymer.

In any embodiment, a mass percentage of the initiator is 3%-12% based on total mass of the monomer shown in formula III.

In any embodiment, the chain transfer agent includes one or more of cyclohexane, isopropanol, methanol, and acetone.

A third aspect of this application provides a positive electrode plate including a positive electrode current collector and a positive electrode film layer provided on at least one surface of the positive electrode current collector, where the positive electrode film layer includes a positive electrode active substance, a conductive agent, and the binder in any embodiment or a binder prepared using the preparation method in any embodiment.

The positive electrode plate has excellent adhesion force at low addition amounts of binder.

In any embodiment, a mass fraction of the binder does not exceed 1.2%, based on total mass of the positive electrode film layer.

Controlling the mass fraction of the binder in an appropriate range can improve the load of active substances in the battery electrode plate while ensuring sufficient adhesion force of the electrode plate, helping to further improve the power performance of the battery.

In any embodiment, the positive electrode active substance is a lithium-containing transition metal oxide.

In any embodiment, the lithium-containing transition metal oxide is at least one of lithium iron phosphate or lithium nickel cobalt manganese oxide, their materials modified by doping, or their materials modified by conductive carbon coating, modified by conductive metal coating, or modified by conductive polymer coating.

A fourth aspect of this application provides a secondary battery including an electrode assembly and an electrolyte, where the electrode assembly includes a separator, a negative electrode plate, and the positive electrode plate in the third aspect of this application.

According to a fifth aspect of this application, an electric apparatus is provided, including the secondary battery in the third aspect of this application.

### BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. cover plate.

### DESCRIPTION OF EMBODIMENTS

The following specifically discloses embodiments of a positive electrode active material and a manufacturing method thereof, a positive electrode plate, a secondary battery, a battery module, a battery pack, and an electrical apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Fluoropolymers are one of the binders most widely used in existing secondary batteries. However, traditional fluoropolymer has a low viscosity, and usually needs to be added in large amounts to ensure the effective adhesion of active substances so as to provide electrode plates with effective adhesion force. However, increased usage of a traditional fluoropolymer will reduce the loading amount of the active material in the electrode plate and affect the improvement of the battery power performance, making it difficult to meet the requirements for battery cycling performance.

### [Binder]

This application provides a binder composition. The binder composition includes a first fluoropolymer and a second fluoropolymer, where a weight-average molecular weight of the first fluoropolymer is 1,500,000-5,000,000, and a weight-average molecular weight of the second fluoropolymer does not exceed 600,000.

The term "binder composition" used herein refers to a mixture forming a colloidal solution or colloidal dispersion in a dispersion medium.

The term "fluoropolymer" used herein refers to a polymer where a fluorine-containing monomer serves as the main synthetic monomer. On the one hand, the polymer includes an aggregate of macromolecules prepared through polymerization reactions, which are chemically homogeneous but different in polymerization degree, molar mass, and chain length. On the other hand, the term also includes derivatives of such macromolecular aggregate formed through polymerization reactions. To be specific, the polymers are chemically homogeneous or heterogeneous compounds that can be obtained through reactions of functional groups in the foregoing macromolecules, such as addition or substitution. The fluoropolymers herein include both homopolymers and copolymers.

The term "weight-average molecular weight" used herein refers to a sum of products of weight fractions of molecules with different molecular weights in a polymer and their corresponding molecular weights.

In some embodiments, a dispersion medium of the binder composition is an oily solvent. An example of the oily solvent includes but is not limited to dimethylacetamide, N,N-dimethylformamide, N-methylpyrrolidone, acetone, dimethyl carbonate, ethyl cellulose, and polycarbonate. That is, the binder is dissolved in the oily solvent.

In some embodiments, the binder composition is used to fix an electrode active substance and/or a conductive agent in appropriate positions and adhere them to a conductive metal component to form an electrode.

In some embodiments, the binder composition is used as a positive electrode binder for bonding the positive electrode active material and/or the conductive agent to form an electrode.

In some embodiments, the binder composition is used as a negative electrode binder for bonding the negative electrode active material and/or the conductive agent to form an electrode.

In some embodiments, the weight-average molecular weight of the first fluoropolymer is 1,500,000 to 5,000,000. In some embodiments, the weight-average molecular weight of the first fluoropolymer is 1,500,000, 2,000,000, 2,500,000, 3,000,000, 3,200,000, 3,500,000, 4,000,000, 4,500,000, 5,000,000, or any value therebetween.

In some embodiments, the weight-average molecular weight of the second fluoropolymer does not exceed 600,000. In some embodiments, the weight-average molecular weight of the second fluoropolymer is optionally 5000, 10,000, 20,000, 30,000, 40,000, 50,000, 60,000, 70,000, 80,000, 90,000, 100,000, 110,000, 120,000, 130,000, 140,000, 150,000, 200,000, 250,000, 300,000, 350,000, 400,000, 450,000, 500,000, 550,000, 600,000, or any value therebetween.

In this application, the weight-average molecular weights of fluoropolymers may be tested using a method known in the art, for example, gel chromatography. For example, the Waters 2695 Isocratic HPLC gel chromatograph (differential refractometer 2141) is used for the test. In some embodiments, the test method is as follows: A polystyrene solution sample with a mass fraction of 3.0% is used as a reference, and a matching chromatographic column (oily: Styragel HT5MF7.8*300 mm + Styragel HT4) is selected. A 3.0% polymer colloidal solution is prepared using a purified N-methylpyrrolidone (NMP) solvent, and the prepared solution is left standing for one day for later use. During test, a syringe is rinsed several times with tetrahydrofuran. Then, 5 ml of experimental solution is taken in to remove the air from the syringe, and the needle tip is dried. Finally, the sample solution is slowly injected into the sample inlet. When the reading is stable, the weight-average molecular weight is read.

The fluorine elements contained in the first fluoropolymer and the second fluoropolymer form hydrogen bonds with the hydroxyl group or/and carboxyl group on the surfaces of the active material and current collector, improving the adhesion force of the electrode plate. The first fluoropolymer with a weight-average molecular weight of 1,500,000 to 5,000,000 can increase the adhesion force of the electrode plate and improve the capacity retention of the battery during cycling when added in small amounts. The addition of the second fluoropolymer in the binder can reduce the crystallinity of the binder, improve the flexibility of the electrode plate, and improve the processability of the slurry, preventing delamination of the electrode plate in the drying process of electrode plate preparation. The addition of the second fluoropolymer also ensures uniform dispersion of the active material in the electrode plate, and reduces the sheet resistance, further optimizing the cycling performance of the battery. The foregoing binder composition can ensure that the electrode plate has sufficient adhesion force and flexibility even when added in small amounts, helping improve the energy density and cycling performance of the battery.

In some embodiments, a mass percentage of the second fluoropolymer is 0.1% to 10% based on total mass of the binder composition.

In some embodiments, the mass percentage of the second fluoropolymer is optionally 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, 10%, or any value therebetween, based on the total mass of the binder composition.

If the mass ratio of the first fluoropolymer to the second fluoropolymer is excessively large, that is, the mass of the first fluoropolymer is excessively high, the purpose of reducing the cost cannot be achieved. If the mass ratio of the first fluoropolymer to the second fluoropolymer is excessively small, that is, the mass of the first fluoropolymer is excessively low, the adhesion force of the electrode plate decreases, affecting the cycling performance of the battery.

With the mass ratio of the first fluoropolymer to the second fluoropolymer controlled within an appropriate range, the binder at low addition amounts can ensure that the electrode plate has excellent adhesion force, improving the capacity retention of the battery during cycling. The crystallinity and processability of the binder can be effectively improved by adding a small amount of the second fluoropolymer to the first fluoropolymer, thereby reducing the manufacturing cost and further improving the cycling performance of the battery.

In some embodiments, the crystallinity of the binder composition is not higher than 45%, and optionally is 15%-45%.

The term "crystallinity" used herein refers to a proportion of crystalline regions in a polymer. A microstructure has some regions where molecules are arranged stably and regularly, and such regions with regularly and closely arranged molecules are called crystalline regions.

In this application, crystallinity can be tested using a method known in the art, for example, differential scanning calorimetry. In some embodiments, 0.5 g of the fluoropolymer composition is placed in an aluminum dry crucible and flattened by shaking, and the crucible lid is put on. In a nitrogen atmosphere, purge gas and protective gas are introduced at 50 ml/min and 70 ml/min respectively. The temperature is raised at a speed of 10°C/min, and the test temperature range is -100°C to 400°C. Discovery 250 differential scanning calorimeter (DSC) of TA Instruments in the United States is used for the test and the thermal history is erased.

A DSC/(Mw/mg) curve of the fluoropolymer composition as a function of the temperature is obtained and integrated, where the peak area is the enthalpy of fusion ΔH(J/g) of the fluoropolymer composition. The crystallinity of the binder is ΔH/(ΔHm)× 100%, where ΔHm is the standard enthalpy of fusion (heat of fusion for crystalline) of the fluoropolymer, and ΔHm=104.7 J/g.

The addition of the second fluoropolymer to the first fluoropolymer can effectively reduce the crystallinity of the binder and improve the flexibility of the electrode plate.

In some embodiments, the first fluoropolymer contains a structural unit derived from vinylidene fluoride. In some embodiments, the first fluoropolymer is vinylidene fluoride homopolymer. In some embodiments, the first fluoropolymer is vinylidene fluoride copolymer.

In some embodiments, the first fluoropolymer further contains a structural unit shown in formula I, 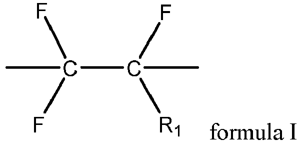 where R₁ includes one or more of hydrogen, fluorine, chlorine, and trifluoromethyl.

In some embodiments, the first fluoropolymer includes one or more of polyvinylidene fluoride, vinylidene fluoride-chlorotrifluoroethylene copolymer, vinylidene fluoride-hexafluoropropylene copolymer, vinylidene fluoride-chlorotrifluoroethylene-hexafluoropropylene copolymer, vinylidene fluoride-tetrafluoroethylene-hexafluoropropylene copolymer, and vinylidene fluoride-chlorotrifluoroethylene-tetrafluoroethylene-hexafluoropropylene copolymer.

In some embodiments, a polydispersity coefficient of the first fluoropolymer is 1.5-2.5, optionally 2-2.3. In some embodiments, the polydispersity coefficient of the first fluoropolymer is optionally 1.5, 1.6, 1.7, 1.8, 1.9, 2, 2.1, 2.2, 2.3, or any value therebetween.

The term "polydispersity coefficient" used herein refers to a ratio of the weight-average molecular weight of a polymer to the number-average molecular weight of the polymer.

The term "number-average molecular weight" used herein refers to a sum of products of molar fractions of molecules with different molecular weights in a polymer and their corresponding molecular weights.

If the polydispersity coefficient of the first fluoropolymer is excessively large, the polymerization degree of the first fluoropolymer is relatively low. This affects the uniformity of the binder, so that the binder cannot uniformly adhere the positive electrode active substance to the current collector, affecting the cycling performance of the battery. This also reduces the solid content of the slurry, making it impossible to further improve the energy density of the battery. If the polydispersity coefficient of the first fluoropolymer is excessively small, the preparation process is more difficult and the yield is low, resulting in high production costs.

With the polydispersity coefficient of the first fluoropolymer falling within an appropriate range, the electrode plate can have excellent adhesion force, improving the capacity retention of the battery during cycling. In addition, the proper polydispersity coefficient of the first fluoropolymer can effectively improve the solid content of the slurry and reduce the production costs.

In this application, the polydispersity coefficient of the first fluoropolymer may be tested using a method known in the art, for example, gel chromatography. For example, the Waters 2695 Isocratic HPLC gel chromatograph (differential refractometer 2141) is used for the test. In some embodiments, a polystyrene solution sample with a mass fraction of 3.0% is used as a reference, and a matching chromatographic column (oily: Styragel HT5MF7.8*300 mm + Styragel HT4) is selected. A 3.0% binder colloidal solution is prepared using a purified N-methylpyrrolidone (NMP) solvent, and the prepared solution is left standing for one day for later use. During test, a syringe is rinsed several times with tetrahydrofuran. Then, 5 ml of experimental solution is taken in to remove the air from the syringe, and the needle tip is dried. Finally, the sample solution is slowly injected into the sample inlet. When the reading is stable, the weight-average molecular weight a and the number-average molecular weight b are read separately. The polydispersity coefficient is a/b.

In some embodiments, crystallinity of the first fluoropolymer is 34%-48%. In some embodiments, crystallinity of the first fluoropolymer is 40%-48%. In some embodiments, crystallinity of the first fluoropolymer is 34%, 35%, 36%, 37%, 38%, 39%, 40%, 41%, 42%, 43%, 44%, 45%, 46%, 47%, 48%, or any value therebetween.

In some embodiments, viscosity of a colloidal solution containing 4% by mass of the first fluoropolymer, prepared by dissolving the first fluoropolymer in N-methylpyrrolidone, is 2400 MPa s to 5000 MPa s. In some embodiments, viscosity of a colloidal solution containing 4% by mass of the first fluoropolymer, prepared by dissolving the first fluoropolymer in N-methylpyrrolidone, is optionally any one of 2500 MPa s-3000 MPa s, 3000 MPa s-3300 MPa s, 3300 MPa s-3500 MPa s, 3500 MPa s-3800 MPa s, 3800 MPa s-4000 MPa s, 4000 MPa s-4200 MPa s, 4200 MPa s-4600 MPa s, 4600 MPa s-5000 MPa s, 3100 MPa s-3400 MPa s, 3400 MPa s-3800 MPa s, 3800 MPa s-4600 MPa s, 4600 MPa s-5000 MPa s, and 3600 MPa s-5000 MPa s.

If the viscosity of the first fluoropolymer is excessively high, the viscosity of the prepared binder solution will be excessively high, making it difficult to stir and reducing the dispersion of the binder. This makes it difficult for the binder to evenly adhere the positive electrode active material to the current collector, affecting the cycling performance of the battery. In addition, the excessively high viscosity of the binder solution slows down the slurry preparation process. If the viscosity of the first fluoropolymer is excessively low, the viscosity of the prepared binder solution will be excessively low, making it difficult for the electrode plate to have sufficient adhesive force under low addition amounts.

In addition, during preparation of a positive electrode slurry, the binder needs to have a certain viscosity to prevent the settling of the positive electrode active material, conductive agent, and other additives, allowing the slurry to be placed more stably. In the conventional art, achieving a viscosity of colloidal solution of 2400 MPa s to 5000 MPa s requires at least a binder content of 7% by mass, based on mass of the colloidal solution. The first fluoropolymer in this application can achieve the expected viscosity of colloidal solution with a usage amount of 4%, providing a foundation for reducing the content of the binder in the positive electrode film layer.

With the viscosity of the solution containing the first fluoropolymer controlled within an appropriate range, the binder at low addition amounts can ensure that the electrode plate has excellent adhesion force, improving the capacity retention of the battery during cycling.

In some embodiments, the second fluoropolymer contains a structural unit shown in formula II, 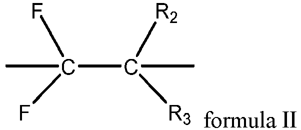 where R₂ and R₃ each independently include at least one of hydrogen, halogen, or a C₁₋₃ alkyl group containing at least one fluorine atom.

In some embodiments, R₂ and R₃ each independently include at least one of hydrogen, fluorine, chlorine, or trifluoromethyl.

In some embodiments, the second fluoropolymer includes one or more of polytetrafluoroethylene, polyvinylidene fluoride, poly(vinylidene fluoride-hexafluoropropylene) copolymer, poly(vinylidene fluoride-tetrafluoroethylene) copolymer, poly(vinylidene fluoride-chlorovinylidene fluoride) copolymer, and poly(vinylidene fluoride-tetrafluoroethylene-hexafluoropropylene) copolymer.

In some embodiments, a terminal group of the second fluoropolymer contains a hydroxyl group or an ester group.

The second fluoropolymer has a small weight-average molecular weight, and the terminal group has a high mass content in it, so the terminal group has great influence on the performance of the second fluoropolymer. The terminal group of the second fluoropolymer contains a hydroxyl group or an ester group, which can effectively improve the adhesion of the second fluoropolymer and reduce the decrease in adhesion performance of the electrode plate caused by addition of the second fluoropolymer.

The terminal group structure of the polymer may be studied by nuclear magnetic resonance. The terminal group structure of the polymer is analyzed by ¹⁹F-NMR and ¹H-NMR. For example, dimethyl sulfoxide is used as a solvent, CFCl₃ as the standard for fluorine spectrum, and TMS as the standard for hydrogen spectrum.

In an embodiment of the application, a preparation method of binder composition is provided, including the following steps:
preparing a first fluoropolymer: under a polymerizable condition, subjecting a raw material containing vinylidene fluoride monomer to a first polymerization reaction to prepare the first fluoropolymer, where a weight-average molecular weight of the first fluoropolymer is 1,500,000-5,000,000;
preparing a second fluoropolymer: under a polymerizable condition, subjecting a raw material containing vinylidene fluoride monomer to a second polymerization reaction to prepare the second fluoropolymer, where a weight-average molecular weight of the second fluoropolymer does not exceed 600,000; and
blending: blending the first fluoropolymer and the second fluoropolymer to prepare a binder composition.

The term "blending" used herein refers to a process in which two or more substances are made into a macroscopic homogeneous material under conditions such as a specified temperature and/or shear stress.

This binder preparation method is simple, environmentally friendly, cost-effective, and conducive to industrial production. In addition, the binder prepared using this method can ensure excellent adhesion force for the electrode plate, and improve the capacity retention of the battery during cycling even when added in small amounts.

In some embodiments, in the blending step, the mass ratio of the first fluoropolymer to the second fluoropolymer is 999:1-9:1. In some embodiments, the mass ratio of the first fluoropolymer to the second fluoropolymer is optionally 9:1, 20:1, 30:1, 40:1, 50:1, 60:1, 70:1, 80:1, 90:1, 100:1, 200:1, 300:1, 400:1, 500:1, 600:1, 700:1, 800:1, 900:1, 999:1, or any value therebetween.

With the mass ratio of the first fluoropolymer to the second fluoropolymer controlled within an appropriate range, the binder at low addition amounts can ensure that the electrode plate has excellent adhesion force, improving the processibility of the battery.

In some embodiments, the synthesis step of the first fluoropolymer includes: in a non-reactive gas atmosphere, subjecting the raw material containing vinylidene fluoride monomer to the first polymerization reaction for 6 hours to 12 hours at a reaction pressure of 6 MPa to 8 MPa and a reaction temperature of 45°C to 60°C; and
adding a chain transfer agent, and when pressure in a reaction system drops to 2 MPa to 2.5 MPa, stopping the reaction, implementing solid-liquid separation, and retaining solid phase.

The term "non-reactive gas" used herein refers to a gas that does not react with the reactants in the reaction system. Common non-reactive gases include inert gases such as argon and nitrogen.

In some embodiments, the reaction pressure of the first polymerization reaction is one of 6 MPa-6.5 MPa, 6.5 MPa-7 MPa, 7 MPa-7.5 MPa, 7.5 MPa-8 MPa, 6 MPa-7 MPa, and 7 MPa-8 MPa.

In some embodiments, the reaction temperature of the first polymerization reaction is one of 45°C-50°C, 50°C-55°C, 55°C-60°C, 45°C-55°C, and 50°C-60°C.

In some embodiments, the time of the first polymerization reaction is 6 h-7 h, 7 h-8 h, 8 h-9 h, 9 h-10 h, 10 h-11 h, 11 h-12 h, 6 h-8 h, or6 h-10 h.

When the pressure of polymerization reaction is large, the pressure for monomers to enter the reaction solution is large, and a large number of monomers enter the reaction solution, which can lead to a large-scale polymerization reaction, resulting in more first fluoropolymers generated, with a large polydispersity coefficient. As the monomers decrease, the polymerization reaction lacks a supply of monomers, leading to a relatively small weight-average molecular weight of the generated first fluoropolymer, thus affecting the adhesion force of the electrode plate and the capacity retention of the battery during cycling.

When the pressure of polymerization reaction is small, the pressure for monomers to enter entering the reaction solution is small, and the monomers cannot be continuously replenished for the reaction, which is not conducive to the continuous polymerization. As a result, the weight-average molecular weight of the prepared first fluoropolymer is too low to meet the adhesion force requirements, and the cycling performance of the battery is also reduced.

When the polymerization temperature is low, the driving force for copolymerization is small, and the polymerization reaction is insufficient. As a result, the molecular weight of the prepared first fluoropolymer is excessively small, leading to a significant decline in adhesion force and cycling performance.

When the polymerization temperature is high, the occurrence of a large-scale polymerization reaction leads to an increase in the number of the generated first fluoropolymers. As the monomers decrease, the polymerization reaction lacks a supply of monomers, leading to a relatively small weight-average molecular weight of the generated first fluoropolymer, thus affecting the adhesion force of the electrode plate and the capacity retention of the battery during cycling.

When the polymerization reaction time is short, the polymerization reaction cannot be sustained, and the weight-average molecular weight of the prepared first fluoropolymer is small, which also results in a decline in adhesion force and cycling performance.

When the polymerization time is long, as the monomers are continuously consumed, the decreasing pressure falls below the conditions required for polymerization. Prolonging the reaction time does not sustain the polymerization reaction, leading to a reduction in production efficiency.

The weight-average molecular weight of the first fluoropolymer can be controlled by controlling the reaction pressure, reaction temperature, and reaction time of the polymerization reaction in an appropriate range, so that the electrode plate has excellent adhesion force and the battery has a good capacity retention during cycling.

In some embodiments, the first polymerization reaction includes the following steps:
adding a solvent and a dispersant into a container, evacuating the container, and filling the container with non-reactive gas;
adding a first initiator and a pH regulator into the container, adjusting a pH value to 6.5-7, and then adding a raw material containing vinylidene fluoride monomer to make pressure in the container reach 6 MPa-8 MPa; and
stirring for 30-60 minutes and heating till 45°C-60°C to perform the first polymerization reaction.

Before the temperature is raised for the first polymerization reaction, the materials are mixed to uniformity, allowing for a more thorough reaction, as well as a more appropriate polydispersity coefficient, crystallinity, and particle size of the obtained polymer.

In some embodiments, in the first polymerization reaction, the amount of the solvent used is 2-8 times the total mass of the vinylidene fluoride monomer. For example, the amount of the solvent used may alternatively be 3, 4, 5, 6, or 7 times the total mass of the vinylidene fluoride monomer. In some embodiments, the solvent is an aqueous solvent.

In some embodiments, the dispersant includes one or more of cellulose ether and polyvinyl alcohol.

In some embodiments, the cellulose ether includes one or more of methyl cellulose ether and carboxyethyl cellulose ether.

In some embodiments, in the first polymerization reaction, the amount of the dispersant used is 0.1%-0.3% of the mass of the vinylidene fluoride monomer. For example, the amount of the dispersant used may alternatively be 0.2% of the mass of the vinylidene fluoride monomer.

In some embodiments, the first initiator is an organic peroxide. In some embodiments, the organic peroxide includes one or more of tert-amyl peroxypivalate, tert-amyl peroxypivalate, 2-ethylperoxydicarbonate, diisopropyl peroxydicarbonate, and tert-butylperoxypivalate.

In some embodiments, the amount of the first initiator used is 0.15%-1% of the total mass of the monomer. For example, the amount of the first initiator used may alternatively be 0.2%, 0.4%, 0.6%, or 0.8% of the total mass of the monomer.

In some embodiments, the pH regulator includes one or more of potassium carbonate, potassium bicarbonate, sodium carbonate, sodium bicarbonate, and ammonia water.

In some embodiments, the amount of the pH regulator used is 0.05%-0.2% of the mass of the vinylidene fluoride monomer. For example, the amount of the pH regulator used may alternatively be 0.1% or 0.15% of the mass of the vinylidene fluoride monomer.

In some embodiments, the chain transfer agent includes one or more of cyclohexane, isopropanol, methanol, and acetone.

In some embodiments, in the first polymerization reaction, the amount of chain transfer agent used is 1.5%-3% of the mass of the vinylidene fluoride monomer. For example, the amount of the chain transfer agent used may alternatively be 2% or 2.5%. Controlling the amount of the chain transfer agent used within an appropriate range allows the chain length of a first fluoropolymer to be controlled, thereby obtaining a first fluoropolymer with a molecular weight distributed uniformly within an appropriate range.

In some embodiments, the method for preparing the second fluoropolymer specifically includes:
in a non-reactive gas atmosphere, subjecting at least one monomer shown in formula III to the polymerization reaction for 0.5 hour to 8 hours at a reaction pressure of 0.1 MPa to 5 MPa and a reaction temperature of 60°C to 90°C, stopping the reaction, implementing solid-liquid separation, and retaining solid phase to obtain the second fluoropolymer, 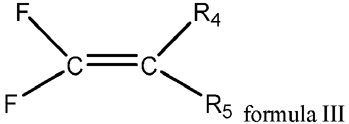
where R₄ and R₅ each independently include at least one of hydrogen, halogen, or a C₁₋₃ alkyl group containing at least one fluorine atom.

In some embodiments, reaction pressure of the second polymerization reaction is 0.1 MPa, 1 MPa, 2 MPa, 3 MPa, 4 MPa, 5 MPa, or any value therebetween.

In some embodiments, reaction temperature of the second polymerization reaction is 60°C, 65°C, 70°C, 75°C, 80°C, 85°C, 90°C, or any value therebetween.

The polymerization reaction is performed at high temperatures under high pressure. This can improve the reaction efficiency, shorten the reaction time, increase the conversion rate of the reaction, and improve the product uniformity and purity.

In some embodiments, the second polymerization reaction further includes the following steps:
adding a solvent and a dispersant into a container, and filling the container with non-reactive gas; and
adding the monomer shown in formula III, heating to 60°C to 90°C, and adding a second initiator and a chain transfer agent.

In some embodiments, the second initiator contains an inorganic peroxide which may be selected from potassium persulfate or ammonium persulfate.

The test results of nuclear magnetic resonance show that when inorganic peroxide is used as the initiator, the terminal group in the second fluoropolymer includes -CF₂-CH₂OH or -CF₂-CH₂OOCCH₃. The existence of the hydroxyl group and ester group in the terminal group can effectively improve the adhesion of the second fluoropolymer and reduce the decrease in adhesion performance of the binder composition caused by addition of the second fluoropolymer.

In some embodiments, a mass percentage of the initiator is 3%-12% based on total mass of the monomer shown in formula III.

High initiator content helps improve the reaction efficiency, shorten the reaction time, and improve the product uniformity.

In some embodiments, the chain transfer agent includes one or more of cyclohexane, isopropanol, methanol, and acetone.

### [Positive electrode plate]

A positive electrode plate includes a positive electrode current collector and a positive electrode film layer provided on at least one surface of the positive electrode current collector, where the positive electrode film layer includes a positive electrode active material, a conductive agent, and the binder in some embodiments or a binder prepared using the preparation method in some embodiments.

The positive electrode plate has excellent adhesion force at low addition amounts of binder.

In some embodiments, a mass fraction of the binder composition does not exceed 1.2% based on total mass of the positive electrode film layer.

In some implementations, a mass fraction of the binder is 0.8%-1.2%. In some embodiments, a mass percentage of the binder is 0.8%, 0.9%, 1%, 1.1%, 1.2%, or any value therebetween.

Even added in small amounts, the binder composition can effectively improve the adhesion performance, flexibility, and processability of the electrode plate, improving the energy density and cycling performance of the battery.

In some embodiments, the positive electrode active material is a lithium-containing transition metal oxide.

In some embodiments, the positive electrode active material is at least one of lithium iron phosphate or lithium nickel cobalt manganese oxide, their materials modified by doping, or their materials modified by conductive carbon coating, modified by conductive metal coating, or modified by conductive polymer coating.

In some embodiments, a preparation method of positive electrode plate is provided, including the following steps:
stage 1: mixing a positive electrode active material, a conductive agent, and the binder in any embodiment or a binder prepared using the preparation method in any embodiment, and performing first stirring;
stage 2: adding a solvent and performing second stirring;
stage 3: adding a dispersant and performing third stirring to obtain a slurry, with the viscosity of the slurry controlled between 8000 MPa s and 15,000 MPa s; and
stage 4: applying the slurry on a positive electrode current collector to obtain a positive electrode plate.

The preparation method is simple and suitable for industrial production. The preparation method is beneficial to reducing the settling of the first fluoropolymer with a high molecular weight in the slurry, thereby helping improve the quality of the slurry and the uniformity of the positive electrode plate.

In some embodiments, in the first stirring, a stirring revolution speed is 25 r/min and stirring time is 30 min.

In some embodiments, in the second stirring, a stirring revolution speed is 25 r/min, a stirring rotation speed is 800-1000 r/min, and stirring time is 50-80 min.

In some embodiments, in the third stirring, a stirring rotation speed is 1200-1500 r/min and stirring time is 50-70 min.

In some embodiment, the dispersant is at least one of polyethylene glycol octylphenyl ether, polyvinylpyrrolidone, polyvinyl alcohol, carboxymethyl cellulose, polyacrylamide, polyacrylic acid, polyacrylic acid sodium, or polyimide.

In some embodiments, a mass fraction of the dispersant is 0.2%-0.5%, based on total mass of the positive electrode film layer.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well-known in the art. For example, the positive electrode active material may include at least one of the following materials: olivine-structured lithium-containing phosphate, lithium transition metal oxide, or respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), or modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, or composite materials of lithium manganese iron phosphate and carbon.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, or carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, but may use other conventional materials that can be used as negative electrode active materials for batteries. One of these negative electrode active materials may be used alone, or two or more of them may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative-electrode film layer further optionally includes a conductive agent. The conductive agent may be selected from at least one of superconducting carbon, acetylene black, carbon black, Ketjen black, carbon dots, carbon nanotubes, graphene, or carbon nanofiber.

In some embodiments, the negative electrode film layer may further optionally include other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, or diethyl sulfone.

In some embodiments, the liquid electrolyte further optionally includes an additive. For example, the additive may include a negative electrode film-forming additive and a positive electrode film-forming additive, and may further include an additive capable of improving some performance of the battery, for example, an additive for improving over-charge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and fluoropolymer. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, which, for example, may be polypropylene, polybutylene terephthalate, and polybutylene succinate.

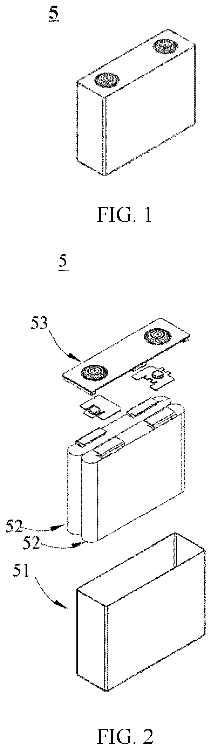

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a bottom plate and side plates connected to the bottom plate, and the bottom plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

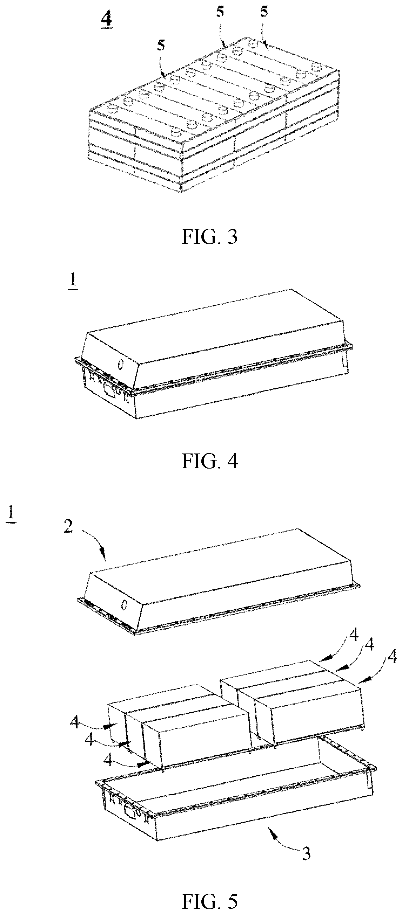

FIG. 3 shows a battery module 4 as an example. Referring to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

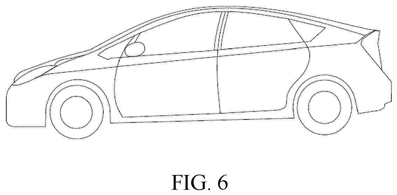

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus is usually required to be light and thin, and a secondary battery may be used as a power source.

### Examples

The following describes examples of this application. The examples described below are illustrative and only used for explaining this application, and cannot be construed as limitations on this application. Examples in which technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Preparation of binder composition

Preparation of first fluoropolymer: 4 kg of deionized water and 2 g of methyl cellulose ether were added into a 10L autoclave, evacuation was performed and O₂ was replaced with N₂ for three times, 5 g of tert-butylperoxypivalate and 2 g of sodium bicarbonate were added, 1 kg of vinylidene fluoride monomer was added until pressure reached 7 MPa. The mixture was stirred for 30 minutes and heated to 45°C for polymerization reaction. After 10 hours of polymerization reaction, 20 g of cyclohexane was added to continue the reaction. The reaction is stopped when the pressure in the autoclave dropped to 2 MPa. The solid phase was collected after centrifugation of the reaction system, followed by washing and drying, to obtain a polyvinylidene fluoride binder with a weight-average molecular weight of 3,200,000, which was also the first fluoropolymer.

The polyvinylidene fluoride binder with a weight-average molecular weight of 3,200,000 has a polydispersity coefficient of 2.2, a crystallinity of 45%, and a Dᵥ50 particle size of 100 µ m. The binder was dissolved in an N-methylpyrrolidone solution to prepare a solution with a mass concentration of 4wt%. The viscosity of the solution was measured to be 4900 MPa s.

### Preparation of second fluoropolymer:

In a 0.5L autoclave, 219 g of deionized water and 0.1 g of hydroxypropyl methylcellulose were added. The mixture was purged with nitrogen several times to remove oxygen, and then 120 g of vinylidene fluoride monomer gas was introduced. After the monomer was added, the reaction temperature was controlled at 85°C. After water-soluble ammonium persulfate initiator and 0.14 g of isopropanol chain transfer agent were added, the reaction started. The amount of the initiator added was about 8% of the total amount of the monomer added, the polymerization time was 1 h, and the pressure was maintained at 4.4 MPa. The reaction product was washed with water and dried to obtain a polyvinylidene fluoride polymer.

The first fluoropolymer and the second fluoropolymer were blended at a mass ratio of 99.9:0.1 to obtain a binder composition containing the first fluoropolymer and the second vinylidene fluoride.

### (2) Preparation of positive electrode plate

Lithium iron phosphate, the binder composition, and acetylene black were put into a planetary mixer, and the mixture was stirred for 30 minutes at a revolution speed of 25 r/min, where a mass fraction of the binder composition was 1.2% based on the total mass of the positive electrode film layer.

2.4 kg of N-methylpyrrolidone (NMP) solution was added into the mixer, and the mixture was stirred for 70 minutes at a revolution speed of 25 r/min and a rotation speed of 900 r/min.

12.3 g of polyvinylpyrrolidone dispersant was added into the mixer, and the mixture was stirred for 60 minutes at a revolution speed of 25 r/min and a rotation speed of 1300 r/min.

After stirring, the viscosity of the slurry was tested. The viscosity is controlled at 8000-15,000 MPa s.

If the viscosity is higher, a N-methylpyrrolidone (NMP) solution is added until the viscosity falls within that range. After the NMP solution was added, the mixture was stirred for 30 minutes at a revolution speed of 25 r/min and a rotation speed of 1200-1500 r/min to obtain a positive electrode slurry. The prepared positive electrode slurry was applied onto carbon-coated aluminum foil, baked at 110°C for 15 minutes, and cold-pressed and then cut into discs with a diameter of 15 mm to obtain the positive electrode plate.

### (3) Negative electrode plate

The lithium metal sheet was used as the negative electrode plate.

### (4) Separator

The polypropylene film was used as the separator.

### (5) Preparation of electrolyte

In an argon glove box (H₂O < 0.1 ppm, O₂ < 0.1 ppm), organic solvents ethylene carbonate (EC) and ethyl methyl carbonate (EMC) were mixed to uniformity at a volume ratio of 3/7, LiPF₆ lithium salt was added to the organic solvent, and the mixture was stirred well to prepare a 1 M LiPF₆ EC/EMC solution, so as to obtain the electrolyte.

### (6) Preparation of battery

The positive electrode plate, negative electrode plate, separator, and electrolyte in Example 1 were assembled into a button battery in a button battery box.

### Examples 2 to 9

The preparation methods were the same as those in Example 1, except that the mass ratio of the first fluoropolymer to the second fluoropolymer in the binder composition was adjusted. The specific parameters are shown in Table 1.

### Examples 10 to 15

Other methods were the same as those in Example 3, except that the weight-average molecular weight of the second fluoropolymer in the binder composition was adjusted. The specific parameters are shown in Table 1.

In Example 10, the weight-average molecular weight of polyvinylidene fluoride was 5000, and the preparation method was as follows:
In a 0.5L autoclave, 219 g of deionized water and 0.1 g of hydroxypropyl methylcellulose were added. The mixture was purged with nitrogen several times to remove oxygen, and then 120 g of vinylidene fluoride monomer gas was introduced. After the monomer was added, the reaction temperature was controlled at 87°C. After water-soluble ammonium persulfate initiator and 0.15 g of isopropanol chain transfer agent were added, the reaction started. The amount of the initiator added was about 8% of the total amount of the monomer added, the polymerization time was 0.8 h, and the pressure was maintained at 4.4 MPa. The reaction product was washed with water and dried to obtain a polyvinylidene fluoride polymer.

In Example 11, the weight-average molecular weight of polyvinylidene fluoride was 20,000, and the preparation method was as follows:
In a 0.5L autoclave, 219 g of deionized water and 0.1 g of hydroxypropyl methylcellulose were added. The mixture was purged with nitrogen several times to remove oxygen, and then 120 g of vinylidene fluoride monomer gas was introduced. After the monomer was added, the reaction temperature was controlled at 83°C. After water-soluble ammonium persulfate initiator and 0.14 g of isopropanol chain transfer agent were added, the reaction started. The amount of the initiator added was about 8% of the total amount of the monomer added, the polymerization time was 1 h, and the pressure was maintained at 4.4 MPa. The reaction product was washed with water and dried to obtain a polyvinylidene fluoride polymer.

In Example 12, the weight-average molecular weight of polyvinylidene fluoride was 80,000, and the preparation method was as follows:
In a 0.5L autoclave, 219 g of deionized water and 0.1 g of hydroxypropyl methylcellulose were added. The mixture was purged with nitrogen several times to remove oxygen, and then 120 g of vinylidene fluoride monomer gas was introduced. After the monomer was added, the reaction temperature was controlled at 82°C. After water-soluble ammonium persulfate initiator and 0.12 g of isopropanol chain transfer agent were added, the reaction started. The amount of the initiator added was about 8% of the total amount of the monomer added, the polymerization time was 1.5 h, and the pressure was maintained at 4.4 MPa. The reaction product was washed with water and dried to obtain a polyvinylidene fluoride polymer.

In Example 13, the weight-average molecular weight of polyvinylidene fluoride was 150,000, and the preparation method was as follows:
In a 0.5L autoclave, 219 g of deionized water and 0.1 g of hydroxypropyl methylcellulose were added. The mixture was purged with nitrogen several times to remove oxygen, and then 120 g of vinylidene fluoride monomer gas was introduced. After the monomer was added, the reaction temperature was controlled at 79°C. After water-soluble ammonium persulfate initiator and 0.12 g of isopropanol chain transfer agent were added, the reaction started. The amount of the initiator added was about 7.0% of the total amount of the monomer added, the polymerization time was 1.5 h, and the pressure was maintained at 4.4 MPa. The reaction product was washed with water and dried to obtain a polyvinylidene fluoride polymer.

In Example 14, the weight-average molecular weight of polyvinylidene fluoride was 400,000. In Example 15, polyvinylidene fluoride was purchased and had a weight-average molecular weight of 600,000.

Example 16 was basically the same as Example 3, except that the weight-average molecular weight of the first fluoropolymer was 1,500,000. Example 17 was basically the same as Example 12, except that the weight-average molecular weight of the first fluoropolymer was 1,500,000. Example 18 was basically the same as Example 14, except that the weight-average molecular weight of the first fluoropolymer was 1,500,000. The preparation method of polyvinylidene fluoride with a weight-average molecular weight of 1,500,000 was as follows:
4 kg of deionized water and 2 g of methyl cellulose ether were added into a 10L autoclave, evacuation was performed and O₂ was replaced with N₂ for three times, 5 g of tert-butylperoxypivalate and 2 g of sodium bicarbonate were added, 1 kg of vinylidene fluoride monomer was added until pressure reached 7 MPa. The mixture was stirred for 30 minutes and heated to 45°C for polymerization reaction. After 5 hours of polymerization reaction, 30 g of cyclohexane was added to continue the reaction. The reaction is stopped when the pressure in the autoclave dropped to 2 MPa. The solid phase was collected after centrifugation of the reaction system, followed by washing and drying, to obtain the polyvinylidene fluoride binder.

The polyvinylidene fluoride had a polydispersity coefficient of 2.18, a crystallinity of 41.5%, and a Dᵥ50 particle size of 45 µm. The polyvinylidene fluoride was dissolved in an N-methylpyrrolidone solution to prepare a solution with a mass concentration of 4wt%. The viscosity of the solution was measured to be 3000 MPa s.

The preparation methods of Examples 19 to 21 were basically the same as those of Examples 16 to 18, except that the weight-average molecular weight of the first fluoropolymer was 5,000,000. The specific preparation methods were as follows:
4 kg of deionized water and 2 g of methyl cellulose ether were added into a 10L autoclave, evacuation was performed and O₂ was replaced with N₂ for three times, 5 g of tert-butylperoxypivalate and 2 g of sodium bicarbonate were added, 1 kg of vinylidene fluoride monomer was added until pressure reached 7 MPa. The mixture was stirred for 30 minutes and heated to 45°C for polymerization reaction. After 12 hours of polymerization reaction, 15 g of cyclohexane was added to continue the reaction. The reaction is stopped when the pressure in the autoclave dropped to 2 MPa. The solid phase was collected after centrifugation of the reaction system, followed by washing and drying, to obtain the polyvinylidene fluoride binder.

The polyvinylidene fluoride had a polydispersity coefficient of 2.2, a crystallinity of 46%, and a Dᵥ50 particle size of 150 µm. The polyvinylidene fluoride was dissolved in an N-methylpyrrolidone solution to prepare a solution with a mass concentration of 4wt%. The viscosity of the solution was measured to be 6500 MPa s.

The preparation methods of Examples 22 to 26 were basically the same as those of Example 3, except that the type of the second fluoropolymer was changed. In Example 22, the second fluoropolymer was polytetrafluoroethylene with a weight-average molecular weight of 10,000, and the preparation method was as follows:
In a 1L four-necked flask, 0.4 kg of deionized water and 0.2 g of carboxyethyl cellulose ether were added, nitrogen was introduced to remove dissolved oxygen from the solution. 1.0 g of tert-amyl peroxypivalate and 0.1 g of potassium carbonate were added, 0.1 kg of tetrafluoroethylene was introduced, and the mixture was stirred for 30 minutes, heated to 68°C, and polymerized for 3 hours. The polymerization solution was distilled, washed, separated, dried, and crushed to obtain polytetrafluoroethylene.

In Example 23, the second fluoropolymer was vinylidene fluoride-hexafluoropropylene copolymer with a weight-average molecular weight of 10,000, and the preparation method was as follows:
In a 1L four-necked flask, 0.4 kg of deionized water and 0.2 g of carboxyethyl cellulose ether were added, nitrogen was introduced to remove dissolved oxygen from the solution. 1.0 g of tert-amyl peroxypivalate and 0.1 g of potassium carbonate were added, 0.8 kg of vinylidene fluoride and 0.2 kg of hexafluoropropylene were introduced, and the mixture was stirred for 30 minutes, heated to 68°C, and polymerized for 4 hours. The polymerization solution was distilled, washed, separated, dried, and crushed to obtain polyvinylidene fluoride-hexafluoropropylene.

In Example 24, the second fluoropolymer was polyvinylidene fluoride with a weight-average molecular weight of 10,000, and the preparation method was as follows:
In a 1L four-necked flask, 0.4 kg of deionized water and 0.2 g of carboxyethyl cellulose ether were added, nitrogen was introduced to remove dissolved oxygen from the solution. 1.0 g of 2-ethylperoxydicarbonate and 0.1 g of sodium bicarbonate were added, 0.1 kg of vinylidene fluoride was introduced, and the mixture was stirred for 30 minutes, heated to 68°C, and polymerized for 3 hours. The polymerization solution was distilled, washed, separated, dried, and crushed to obtain polyvinylidene fluoride with a weight-average molecular weight of 10,000, that is, the second fluoropolymer.

In Example 25, the second fluoropolymer was polytetrafluoroethylene with a weight-average molecular weight of 10,000, and the preparation method was as follows:
In a 0.5L autoclave, 219 g of deionized water and 0.1 g of hydroxypropyl methylcellulose were added, and nitrogen was introduced to replace oxygen for several times to remove oxygen. Then, 120 g of tetrafluoroethylene monomer gas was added, the reaction temperature was controlled at 50°C, and initiator ammonium persulfate was added to initiate the reaction. The amount of the initiator added was about 15% of the total amount of the monomer. The reaction pressure was controlled at 0.7 MPa for 1 hour. After polymerization was complete, polytetrafluoroethylene was discharged from the bottom of the autoclave, followed by filtering, washing, drying, and grinding, to obtain a powdery material.

In Example 26, the second fluoropolymer was vinylidene fluoride-hexafluoropropylene copolymer with a weight-average molecular weight of 10,000, and the preparation method was as follows:
In a 0.5L autoclave, 219 g of deionized water and 0.1 g of hydroxypropyl methylcellulose were added. The mixture was purged with nitrogen several times to remove oxygen, and then 100 g of vinylidene fluoride monomer gas and 11.9 g of hexafluoropropylene were introduced. After the monomer was added, the reaction temperature was controlled at 85°C. After water-soluble ammonium persulfate initiator and 0.14 g of isopropanol chain transfer agent were added, the reaction started. The amount of the initiator added was about 8% of the total amount of the monomer added, the polymerization time was 1 h, and the pressure was maintained at 4.4 MPa. The reaction product was washed with water and dried to obtain the second fluoropolymer.

The types of the second fluoropolymer in Examples 27 to 31 were the same as those in Examples 22 to 26, respectively, except that the weight-average molecular weight of the second fluoropolymer was 80,000.

In Example 27, the second fluoropolymer was polytetrafluoroethylene with a weight-average molecular weight of 80,000, and the preparation method was as follows:
In a 1L four-necked flask, 0.4 kg of deionized water and 0.2 g of carboxyethyl cellulose ether were added, nitrogen was introduced to remove dissolved oxygen from the solution. 0.9 g of tert-amyl peroxypivalate and 0.1 g of potassium carbonate were added, 0.1 kg of tetrafluoroethylene was introduced, and the mixture was stirred for 30 minutes, heated to 64°C, and polymerized for 6 hours. The polymerization solution was distilled, washed, separated, dried, and crushed to obtain the second fluoropolymer.

In Example 28, the second fluoropolymer was vinylidene fluoride-hexafluoropropylene copolymer with a weight-average molecular weight of 80,000, and the preparation method was as follows:
In a 1L four-necked flask, 0.4 kg of deionized water and 0.2 g of carboxyethyl cellulose ether were added, nitrogen was introduced to remove dissolved oxygen from the solution. 0.9 g of tert-amyl peroxypivalate and 0.1 g of potassium carbonate were added, 0.8 kg of vinylidene fluoride and 0.2 kg of hexafluoropropylene were introduced, and the mixture was stirred for 30 minutes, heated to 64°C, and polymerized for 7 hours. The polymerization solution was distilled, washed, separated, dried, and crushed to obtain polyvinylidene fluoride-hexafluoropropylene.

In Example 29, the second fluoropolymer was polyvinylidene fluoride with a weight-average molecular weight of 80,000, and the preparation method was as follows:
In a 1L four-necked flask, 0.4 kg of deionized water and 0.2 g of carboxyethyl cellulose ether were added, nitrogen was introduced to remove dissolved oxygen from the solution. 0.9 g of 2-ethylperoxydicarbonate and 0.1 g of sodium bicarbonate were added, 0.1 kg of vinylidene fluoride was introduced, and the mixture was stirred for 30 minutes, heated to 64°C, and polymerized for 6 hours. The polymerization solution was distilled, washed, separated, dried, and crushed to obtain the second fluoropolymer.

In Example 30, the second fluoropolymer was polytetrafluoroethylene with a weight-average molecular weight of 80,000, and the preparation method was as follows:
In a 0.5L autoclave, 219 g of deionized water and 0.1 g of hydroxypropyl methylcellulose were added, and nitrogen was introduced to replace oxygen for several times to remove oxygen. Then, 120 g of tetrafluoroethylene monomer gas was added, the reaction temperature was controlled at 50°C, and initiator ammonium persulfate was added to initiate the reaction. The amount of the initiator added was about 15% of the total amount of the monomer. The reaction pressure was controlled at 0.7 MPa for 1 hour. After polymerization was complete, polytetrafluoroethylene was discharged from the bottom of the autoclave, followed by filtering, washing, drying, and grinding, to obtain a powdery material.

In Example 31, the second fluoropolymer was vinylidene fluoride-hexafluoropropylene copolymer with a weight-average molecular weight of 80,000, and the preparation method was as follows:
In a 0.5L autoclave, 219 g of deionized water and 0.1 g of hydroxypropyl methylcellulose were added. The mixture was purged with nitrogen several times to remove oxygen, and then 100 g of vinylidene fluoride monomer gas and 11.9 g of hexafluoropropylene were introduced. After the monomer was added, the reaction temperature was controlled at 85°C. After water-soluble ammonium persulfate initiator and 0.12 g of isopropanol chain transfer agent were added, the reaction started. The amount of the initiator added was about 8% of the total amount of the monomer added, the polymerization time was 1 h, and the pressure was maintained at 4.6 MPa. The reaction product was washed with water and dried to obtain the second fluoropolymer.

Example 32 was basically consistent with Example 3, except that the first fluoropolymer was vinylidene fluoride-chlorotrifluoroethylene copolymer with a weight-average molecular weight of 3,200,000. The preparation method of the first fluoropolymer was as follows:
In a 10L autoclave, 4 kg of deionized water and 2 g of methyl cellulose ether were added, evacuation was performed and O₂ was replaced with N₂ for three times, 5 g of tert-butylperoxypivalate and 2 g of sodium bicarbonate were added, 0.94 kg of vinylidene fluoride monomer and 0.06 kg of chlorotrifluoroethylene were added to make the system pressure reach 7 MPa. The mixture was stirred for 30 minutes and heated to 45°C. After 10 hours of reaction, 20 g of cyclohexane was added to continue the reaction. The reaction is stopped when the pressure in the autoclave dropped to 2 MPa. The solid phase was collected after centrifugation of the reaction system, followed by washing and drying, to obtain the vinylidene fluoride-chlorotrifluoroethylene polymer.

Comparative Examples 1 to 4 were basically the same as Examples 1, 16, 19, and 32, except that the binder did not contain the second fluoropolymer, but contained only the first fluoropolymer.

In Comparative Example 5, the binder was polyvinylidene fluoride with a weight-average molecular weight of 800,000, which was 701A polyvinylidene fluoride produced by HEC.

### II. Battery performance test

### 1. Binder composition property test

### (1) Test of weight-average molecular weight

Waters 2695 Isocratic HPLC gel chromatograph (differential refractometer 2141) was used. A polystyrene solution sample with a mass fraction of 3.0% was used as a reference, and a matching chromatographic column (oily: Styragel HT5MF7.8*300 mm + Styragel HT4) was selected. A 3.0% binder colloidal solution was prepared using a purified N-methylpyrrolidone (NMP) solvent, and the prepared solution was left standing for one day for later use. During test, a syringe was rinsed several times with tetrahydrofuran. Then, 5 ml of experimental solution was taken in to remove the air from the syringe, and the needle tip was dried. Finally, the sample solution was slowly injected into the sample inlet. When the reading was stable, the weight-average molecular weight was read.

### (2) Test of polydispersity coefficient

Waters 2695 Isocratic HPLC gel chromatograph (differential refractometer 2141) was used. A polystyrene solution sample with a mass fraction of 3.0% was used as a reference, and a matching chromatographic column (oily: Styragel HT5MF7.8*300 mm + Styragel HT4) was selected. A 3.0% binder colloidal solution was prepared using a purified N-methylpyrrolidone (NMP) solvent, and the prepared solution was left standing for one day for later use. During test, a syringe was rinsed several times with tetrahydrofuran. Then, 5 ml of experimental solution was taken in to remove the air from the syringe, and the needle tip was dried. Finally, the sample solution was slowly injected into the sample inlet. When the reading was stable, the weight-average molecular weight a and the number-average molecular weight b were read separately. The polydispersity coefficient was a/b.

### (3) Dᵥ50 test

According to GB/T 19077-2016 particle size distribution laser diffraction method, 0.1 g to 0.13 g of the first fluoropolymer powder was weighed in a 50 ml beaker, then 5 g of anhydrous ethanol was weighed and added to the beaker containing the first fluoropolymer powder, and a stirrer with a length of about 2.5 mm was put into the beaker which was then sealed with plastic wrap. The sample was put into an ultrasonic machine for ultrasonic processing for 5 minutes, and then transferred to a magnetic stirrer for stirring at 500 r/min for more than 20 minutes. Two samples were taken from each batch of products to test the average value. A laser particle size analyzer, for example, a laser particle size analyzer of Mastersizer 2000E from Malvern Instruments Ltd. of UK, was used for testing.

### (4) Crystallinity test

0.5 g of the first fluoropolymer was placed in an aluminum dry crucible and flattened by shaking, and the crucible lid was put on. In a nitrogen atmosphere, purge gas and protective gas were introduced at 50 ml/min and 70 ml/min respectively. The temperature was raised at a speed of 10°C/min, and the test temperature range was -100°C to 400°C. Discovery 250 differential scanning calorimeter (DSC) of TA Instruments in the United States was used for the test and the thermal history was erased.

A DSC/(Mw/mg) curve of the first fluoropolymer as a function of the temperature was obtained and integrated, where the peak area was the enthalpy of fusion ΔH(J/g) of the first fluoropolymer. The crystallinity of the binder is ΔH/(ΔHm 100%) × 100%, where ΔHm 100% was the standard enthalpy of fusion (heat of fusion for crystalline) of the fluoropolymer, and ΔHm100%=104.7 J/g.

### (5) Viscosity test of colloidal solution

14 g of the first fluoropolymer and 336 g of N-methylpyrrolidone (NMP) were weighed separately in a 500 ml beaker, made into a colloidal solution with a mass fraction of 4%, and then dispersed by stirring using a Lichen high-speed grinder at a rotation speed of 800 r/min for 120 minutes. Then ultrasonic vibration was performed for 30 minutes to remove bubbles. At room temperature, Lichen NDJ-5S rotary viscometer was used for testing. A No.3 rotor was inserted into the colloidal solution, with the liquid level mark of the rotor aligned with the colloidal solution level. The viscosity was tested at a rotor speed of 12 r/min, and the viscosity data was read after 6 minutes.

### (6) Terminal group test

The terminal group structure of the polymer was studied by nuclear magnetic resonance. The nuclear magnetic resonance equipment was Bruker AV400 instrument, and the terminal group structure of the polymer was analyzed by ¹⁹F-NMR and ¹H-NMR. Dimethyl sulfoxide was used as a solvent, CFCl₃ as the standard for fluorine spectrum, and TMS as the standard for hydrogen spectrum. For ¹⁹F-NMR analysis, the collection time was 0.33s, the scanning times were 64, the pulse delay was 2s, and the pulse width was 5 µs. For ¹H-NMR analysis, the collection time was 2.2s, the scanning times were 16, the pulse delay was 2s, and the pulse width was 33 µs.

### 2. Slurry property test

### (1) Slurry fluidity test

A proper amount of positive electrode slurry was fetched with a medicine spoon, and unforced flow of the positive electrode slurry was observed. If the unforced flow is smooth, it is determined that fluidity is OK. In the case of poor fluidity, the slurry appears like jelly and is clumped, meaning that gel appears. In this case, it is determined that fluidity is NG.

### (2) Slurry filtration property test

A 500 ml beaker was placed under a 200-mesh sieve bracket, 500 ml of slurry was put onto the sieve for filtration, and the time when the volume of slurry in the beaker reaches 300 ml was recorded. Such time is used to measure the filtration property of the slurry. If the filtration time is shorter than 120s, it indicates that the filtration property of the slurry is OK; if the slurry fails to penetrate the sieve, it indicates that the filtration property of the slurry is NG.

### 3. Electrode plate performance test

### (1) Adhesion force test

Referring to GB-T2790-1995 *180° Peel Strength Test Method for Adhesives*, the adhesion force test process used in the examples and comparative examples of this application is as follows.

Use a blade to cut the electrode plate into a sample with a width of 30 mm and a length of 100-160 mm, and attach a special double-sided adhesive tape to a steel plate, where the adhesive tape is 20 mm wide and 90-150 mm long. Attach the positive electrode film layer of the obtained electrode plate sample to the double-sided adhesive tape, and then use a 2 kg press roller to roll the positive electrode film layer in the same direction for three times.

Attach a 250 mm-long paper tape with the same width as the electrode plate to the current collector of the electrode plate and fix it with crepe adhesive.

Power on a Sunstest tensile machine (with a sensitivity of 1 N), adjust the limiting block to a proper position after the indicator light is on, and use a lower clamp to fix an end of the steel plate with no electrode plate attached. Fold the paper tape upward and fix it with an upper clamp, and adjust the position of the upper clamp by pressing the "Up" and "Down" buttons on the manual controller for the tensile machine. Then, perform test and record the readings. The adhesion force of the electrode plate per unit length is obtained by dividing the force measured when the electrode plate stays balanced by the width of the adhesive tape, so as to represent the adhesive strength between the positive electrode film layer and the current collector.

### (2) Determination of resistance of positive electrode film layer

The dried positive electrode slurry (film layer) at the left, middle, and right positions of the positive electrode plate was cut into small discs with a diameter of 3 mm. A resistance meter from Initial Energy Science&Technology was powered on, a disc was put in the appropriate position of the "probe" of the electrode plate resistance meter, the "Start" button is pressed, and the reading displayed stably was read. Two positions were tested for each disc. An average value of six measurements was calculated as the film layer resistance of the electrode plate.

### (3) Electrode plate brittleness test

The positive electrode plate in the examples was cut into 20×100 mm test samples for later use. The electrode plate was folded in half, fixed, and rolled once using a 2 kg press roller, and whether metal was exposed at the fold position of the electrode plate was observed. If no metal was exposed, the electrode plate was folded in half reversely, fixed, and rolled once using the 2 kg press roller, and whether metal was exposed at the fold position of the electrode plate was observed. The foregoing steps were repeated until metal was exposed at the fold position of the electrode plate. The fold count of the positive electrode plate upon metal exposure was recorded. Three groups were measured to calculate an average value.

### 3. Battery performance test

### (1) Battery capacity retention rate test

The process of testing the capacity retention rate of a battery is as follows: at 25°C, the button battery was charged to 3.65 V at a constant current of 1/3C, charged at a constant voltage of 3.65 V to a current of 0.05C, left standing for 5 minutes, and then discharged to 2.5 V at 1/3C. The capacity was recorded as the initial capacity C0. The foregoing steps were repeated on the same battery, and the discharge capacity Cn of the battery after the n-th cycle was recorded. The battery capacity retention rate Pn=Cn/C0*100% after each cycle. With the 500 point values of P1, P2, ..., P500 as the vertical ordinates and the corresponding numbers of cycles as the horizontal ordinates, a curve graph of the capacity retention rate of the battery and the number of cycles was obtained.

In this test process, the first cycle corresponds to n=1, the second cycle to n=2, ..., and the 500th cycle corresponds to n=500. The battery capacity retention rates corresponding to Examples 1 to 41 or Comparative Examples 1 to 3 in Table 1 are the data measured after 500 cycles under the above test conditions, that is, the value of P500.

### III. Analysis of test results in examples and comparative examples

Batteries in the examples and comparative examples were prepared using the foregoing method, and performance parameters were measured. Table 1 lists the results.

**Table 1**

| No. | First fluoropolymer | | Second fluoropolymer | | | Binder composition | | |
|---|---|---|---|---|---|---|---|---|
| | Type | Weight-average molecular weight (×10⁴) | Type | Terminal group | Weight-average molecular weight (×10⁴) | Mass ratio of second fluoropolymer to binder composition | Mass fraction of binder composition | Crystallinity (%) |
| Example 1 | Polyvinylidene fluoride | 320 | Polyvinylidene fluoride | -CF₂CH₂OH, -CF₂CH₂OOCCH₃ | 1 | 0.10% | 1.20% | 41.53% |
| Example 2 | Polyvinylidene fluoride | 320 | Polyvinylidene fluoride | -CF₂CH₂OH, -CF₂CH₂OOCCH₃ | 1 | 0.25% | 1.20% | 37.27% |
| Example 3 | Polyvinylidene fluoride | 320 | Polyvinylidene fluoride | -CF₂CH₂OH, -CF₂CH₂OOCCH₃ | 1 | 0.5% | 1.20% | 26.66% |
| Example 4 | Polyvinylidene fluoride | 320 | Polyvinylidene fluoride | -CF₂CH₂OH, -CF₂CH₂OOCCH₃ | 1 | 0.75% | 1.20% | 23.82% |
| Example 5 | Polyvinylidene fluoride | 320 | Polyvinylidene fluoride | -CF₂CH₂OH, -CF₂CH₂OOCCH₃ | 1 | 1.0% | 1.20% | 20.15% |
| Example 6 | Polyvinylidene fluoride | 320 | Polyvinylidene fluoride | -CF₂CH₂OH, -CF₂CH₂OOCCH₃ | 1 | 2.0% | 1.20% | 17.13% |
| Example 7 | Polyvinylidene fluoride | 320 | Polyvinylidene fluoride | -CF₂CH₂OH, -CF₂CH₂OOCCH₃ | 1 | 5.0% | 1.20% | 21.59% |
| Example 8 | Polyvinylidene fluoride | 320 | Polyvinylidene fluoride | -CF₂CH₂OH, -CF₂CH₂OOCCH₃ | 1 | 7.5% | 1.20% | 25.60% |
| Example 9 | Polyvinylidene fluoride | 320 | Polyvinylidene fluoride | -CF₂CH₂OH, -CF₂CH₂OOCCH₃ | 1 | 10.0% | 1.20% | 29.99% |
| Example 10 | Polyvinylidene fluoride | 320 | Polyvinylidene fluoride | -CF₂CH₂OH, -CF₂CH₂OOCCH₃ | 0.5 | 0.5% | 1.20% | 32.19% |
| Example 11 | Polyvinylidene fluoride | 320 | Polyvinylidene fluoride | -CF₂CH₂OH, -CF₂CH₂OOCCH₃ | 2 | 0.5% | 1.20% | 33.62% |
| Example 12 | Polyvinylidene fluoride | 320 | Polyvinylidene fluoride | -CF₂CH₂OH, -CF₂CH₂OOCCH₃ | 8 | 0.5% | 1.20% | 28.85% |
| Example 13 | Polyvinylidene fluoride | 320 | Polyvinylidene fluoride | -CF₂CH₂OH, -CF₂CH₂OOCCH₃ | 15 | 0.50% | 1.20% | 33.91% |
| Example 14 | Polyvinylidene fluoride | 320 | Polyvinylidene fluoride | -CF₂CH₂OH, -CF₂CH₂OOCCH₃ | 40 | 0.5% | 1.20% | 29.97% |
| Example 15 | Polyvinylidene fluoride | 320 | Polyvinylidene fluoride | -CF₂CH₂OH, -CF₂CH₂OOCCH₃ | 60 | 0.50% | 1.20% | 34.48% |
| Example 16 | Polyvinylidene fluoride | 150 | Polyvinylidene fluoride | -CF₂CH₂OH, -CF₂CH₂OOCCH₃ | 1 | 0.5% | 1.20% | 28.75% |
| Example 17 | Polyvinylidene fluoride | 150 | Polyvinylidene fluoride | -CF₂CH₂OH, -CF₂CH₂OOCCH₃ | 8 | 0.50% | 1.20% | 30.95% |
| Example 18 | Polyvinylidene fluoride | 150 | Polyvinylidene fluoride | -CF₂CH₂OH, -CF₂CH₂OOCCH₃ | 40 | 0.50% | 1.20% | 31.00% |
| Example 19 | Polyvinylidene fluoride | 500 | Polyvinylidene fluoride | -CF₂CH₂OH, -CF₂CH₂OOCCH₃ | 1 | 0.5% | 1.20% | 30.95% |
| Example 20 | Polyvinylidene fluoride | 500 | Polyvinylidene fluoride | -CF₂CH₂OH, -CF₂CH₂OOCCH₃ | 8 | 0.50% | 1.20% | 33.14% |
| Example 21 | Polyvinylidene fluoride | 500 | Polyvinylidene fluoride | -CF₂CH₂OH, -CF₂CH₂OOCCH₃ | 40 | 0.50% | 1.20% | 33.43% |
| Example 22 | Polyvinylidene fluoride | 320 | Polytetrafluoroethyle ne | (CH₃)₃COCF₂CF₂- | 1 | 0.5% | 1.20% | 43.55% |
| Example 23 | Polyvinylidene fluoride | 320 | Vinylidene fluoride-hexafluoropropylene copolymer | (CH₃)₃COCH₂CF₂- | 1 | 0.5% | 1.20% | 28.66% |
| Example 24 | Polyvinylidene fluoride | 320 | Polyvinylidene fluoride | (CH₃)₃COCH₂CF₂- | 1 | 0.5% | 1.20% | 30.70% |
| Example 25 | Polyvinylidene fluoride | 320 | Polytetrafluoroethyle ne | -CF₂CH₂OH, -CF₂CH₂OOCCH₃ | 1 | 0.5% | 1.20% | 41.64% |
| Example 26 | Polyvinylidene fluoride | 320 | Vinylidene fluoride-hexafluoropropylene copolymer | -CF₂CH₂OH, -CF₂CH₂OOCCH₃ | 1 | 0.5% | 1.20% | 25.12% |
| Example 27 | Polyvinylidene fluoride | 320 | Polytetrafluoroethyle ne | (CH₃)₃COCF₂CF₂- | 8 | 0.50% | 1.20% | 43.55% |
| Example 28 | Polyvinylidene fluoride | 320 | Vinylidene fluoride-hexafluoropropylene copolymer | (CH₃)₃COCH₂CF₂- | 8 | 0.5% | 1.20% | 31.39% |
| Example 29 | Polyvinylidene fluoride | 320 | Polyvinylidene fluoride | (CH₃)₃COCH₂CF₂- | 8 | 0.5% | 1.20% | 27.28% |
| Example 30 | Polyvinylidene fluoride | 320 | Polytetrafluoroethyle ne | -CF₂CH₂OH, -CF₂CH₂OOCCH₃ | 8 | 0.5% | 1.20% | 41.64% |
| Example 31 | Polyvinylidene fluoride | 320 | Vinylidene fluoride-hexafluoropropylene copolymer | -CF₂CH₂OH, -CF₂CH₂OOCCH₃ | 8 | 0.5% | 1.20% | 26.07% |
| Example 32 | Vinylidene fluoride-chlorotrifluoroethylene copolymer | 320 | Polyvinylidene fluoride | -CF₂CH₂OH, -CF₂CH₂OOCCH₃ | 1 | 0.5% | 1.20% | 25.64% |
| Comparative Example 1 | Polyvinylidene fluoride | 320 | / | / | / | / | 1.20% | 47.37% |
| Comparative Example 2 | Polyvinylidene fluoride | 150 | / | / | / | / | 1.20% | 46.61% |
| Comparative Example 3 | Polyvinylidene fluoride | 500 | / | / | / | / | 1.20% | 46.00% |
| Comparative Example 4 | Vinylidene fluoride-chlorotrifluoroethylene copolymer | 320 | / | / | / | / | 1.20% | 41.00% |
| Comparative Example 5 | Polyvinylidene fluoride | 80 | / | / | / | / | 2.00% | 39.00% |

**Table 2**

| No. | Positive electrode slurry | | Electrode plate | | | Battery |
|---|---|---|---|---|---|---|
| | Liquidity | Filtrability | Adhesion force (N/m) | Fold count upon exposure | Sheet resistance (Q) | Capacity retention rate after 500 cycles |
| Example 1 | OK | OK | 19.3 | 2.0 | 0.486 | 89.43% |
| Example 2 | OK | OK | 18 | 2.7 | 0.289 | 92.34% |
| Example 3 | OK | OK | 17.1 | 3.0 | 0.248 | 92.77% |
| Example 4 | OK | OK | 16.3 | 3.3 | 0.256 | 91.74% |
| Example 5 | OK | OK | 15.6 | 3.7 | 0.260 | 91.01% |
| Example 6 | OK | OK | 14.9 | 3.0 | 0.250 | 90.54% |
| Example 7 | OK | OK | 14.5 | 2.7 | 0.245 | 90.09% |
| Example 8 | OK | OK | 14.1 | 2.3 | 0.251 | 89.64% |
| Example 9 | OK | OK | 13.7 | 2.0 | 0.261 | 89.55% |
| Example 10 | OK | OK | 10.1 | 3.3 | 0.283 | 89.87% |
| Example 11 | OK | OK | 17.3 | 1.7 | 0.259 | 91.84% |
| Example 12 | OK | OK | 17.5 | 2.7 | 0.291 | 92.77% |
| Example 13 | OK | OK | 20.1 | 1.3 | 0.276 | 91.34% |
| Example 14 | OK | OK | 18.3 | 3.0 | 0.317 | 92.21% |
| Example 15 | OK | OK | 18.9 | 1.3 | 0.336 | 91.75% |
| Example 16 | OK | OK | 10.1 | 2.0 | 0.258 | 89.27% |
| Example 17 | OK | OK | 10.7 | 3.0 | 0.318 | 89.37% |
| Example 18 | OK | OK | 11.5 | 3.0 | 0.348 | 89.27% |
| Example 19 | OK | OK | 23.4 | 2.0 | 0.481 | 89.22% |
| Example 20 | OK | OK | 25.0 | 2.0 | 0.378 | 89.28% |
| Example 21 | OK | OK | 25.8 | 1.7 | 0.401 | 89.01% |
| Example 22 | OK | OK | 18.4 | 1.0 | 0.987 | 88.20% |
| Example 23 | OK | OK | 11.6 | 1.3 | 0.293 | 90.21% |
| Example 24 | OK | OK | 13.4 | 4.0 | 0.248 | 92.67% |
| Example 25 | OK | OK | 18.9 | 1.0 | 0.883 | 88.40% |
| Example 26 | OK | OK | 16.7 | 3.0 | 0.250 | 91.34% |
| Example 27 | OK | OK | 16.4 | 1.0 | 0.987 | 88.20% |
| Example 28 | OK | OK | 13.6 | 1.3 | 0.376 | 89.86% |
| Example 29 | OK | OK | 13.4 | 4.0 | 0.248 | 92.67% |
| Example 30 | OK | OK | 18.9 | 1.0 | 0.874 | 88.17% |
| Example 31 | OK | OK | 16.1 | 2.7 | 0.347 | 89.83% |
| Example 32 | OK | OK | 14.7 | 3.0 | 0.253 | 90.90% |
| Comparative Example 1 | NG | NG | 20.4 | 1.0 | 1.132 | 88.00% |
| Comparative Example 2 | OK | OK | 10.2 | 1.3 | 0.967 | 88.14% |
| Comparative Example 3 | NG | NG | 28.9 | 1.0 | 1.340 | 86.80% |
| Comparative Example 4 | NG | NG | 18.4 | 1.3 | 1.145 | 87.81% |
| Comparative Example 5 | OK | OK | 19.4 | 1.0 | 1.245 | 87.10% |

According to comparison between Examples 1 to 32 and Comparative Example 5, the binder composition includes a first fluoropolymer and a second fluoropolymer, where a weight-average molecular weight of the first fluoropolymer is 1,500,000-5,000,000, and a weight-average molecular weight of the second fluoropolymer does not exceed 600,000. Compared with the polyvinylidene fluoride binder with a weight-average molecular weight of 800,000 used in the prior art, the binder composition provided in this application effectively improves the adhesion performance of the electrode plate and reduces the usage of the binder.

As can be seen from Examples 1 to 32, the first fluoropolymer includes a structural unit derived from vinylidene fluoride, which can be homopolymer or copolymer; and the second fluoropolymer includes at least one of polytetrafluoroethylene, polyvinylidene fluoride, or poly(vinylidene fluoride-hexafluoropropylene) copolymer.

According to the comparison between Examples 1 to 9 and Comparative Example 1, compared to the use of the macromolecular polyvinylidene fluoride binder alone, the binder composition containing 0.1% to 10% by mass of the second fluoropolymer based on the total mass of the binder composition can optimize the processability of the binder and improve the uniformity of the electrode plate while maintaining high adhesion performance, thereby further improving the cycling performance of the battery. As the content of the second fluoropolymer used in the binder composition increases, the adhesion force of the binder composition gradually decreases, the crystallinity first decreases and then increases, and the flexibility of the electrode plate first increases and then decreases.

As can be seen from the comparison between Examples 10 to 21 and Comparative Example 1, when the weight-average molecular weight of the second fluoropolymer is 5000-600,000, the addition of the second fluoropolymer can better optimize the comprehensive performance of the battery, including adhesion performance, processability, flexibility, and cycling performance.

As can be seen from Examples 22 to 32, when the terminal group of the second fluoropolymer includes a hydroxyl group or an ester group, the addition of the second fluoropolymer can improve the processability of the slurry and further improve the retention of the adhesion performance of the electrode plate, without greatly reducing the adhesion performance of the electrode plate.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A binder composition, **characterized in that** the binder composition comprises a first fluoropolymer and a second fluoropolymer, wherein a weight-average molecular weight of the first fluoropolymer is 1,500,000-5,000,000, and a weight-average molecular weight of the second fluoropolymer does not exceed 600,000.

2. The binder composition according to claim 1, **characterized in that** a mass percentage of the second fluoropolymer is 0.1%-10% based on total mass of the binder composition.

3. The binder composition according to claim 1 or 2, **characterized in that** crystallinity of the binder composition is not higher than 45%, and optionally is 15%-45%.

4. The binder composition according to any one of claims 1 to 3, **characterized in that** the first fluoropolymer comprises a structural unit derived from vinylidene fluoride.

5. The binder composition according to any one of claims 1 to 4, **characterized in that** the first fluoropolymer further comprises a structural unit shown in formula I, 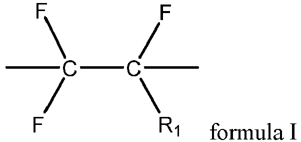 wherein R₁ comprises one or more of hydrogen, fluorine, chlorine, and trifluoromethyl.

6. The binder composition according to any one of claims 1 to 5, **characterized in that** a polydispersity coefficient of the first fluoropolymer is 1.5-2.5, optionally 2-2.3.

7. The binder composition any one of claims 1 to 6, **characterized in that** crystallinity of the first fluoropolymer is 34%-48%, optionally 40%-48%.

8. The binder composition according to any one of claims 1 to 7, **characterized in that** viscosity of a colloidal solution containing 4% by mass of the first fluoropolymer, prepared by dissolving the first fluoropolymer in N-methylpyrrolidone, is 2400 MPa s to 5000 MPa s, optionally 3500 MPa s to 5000 MPa s.

9. The binder composition according to any one of claims 1 to 8, **characterized in that** the first fluoropolymer comprises one or more of polyvinylidene fluoride, vinylidene fluoride-chlorotrifluoroethylene copolymer, vinylidene fluoride-hexafluoropropylene copolymer, vinylidene fluoride-chlorotrifluoroethylene-hexafluoropropylene copolymer, vinylidene fluoride-tetrafluoroethylene-hexafluoropropylene copolymer, and vinylidene fluoride-chlorotrifluoroethylene-tetrafluoroethylene-hexafluoropropylene copolymer.

10. The binder composition according to any one of claims 1 to 9, **characterized in that** the second fluoropolymer comprises a structural unit shown in formula II, 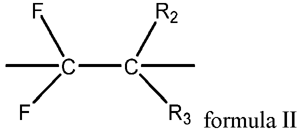 wherein R₂ and R₃ each independently comprise at least one of hydrogen, halogen, or a C₁₋₃ alkyl group containing at least one fluorine atom.

11. The binder composition according to any one of claims 1 to 10, **characterized in that** R₂ and R₃ each independently comprise at least one of hydrogen, fluorine, chlorine, or trifluoromethyl.

12. The binder composition according to any one of claims 1 to 11, **characterized in that** a terminal group of the second fluoropolymer contains a hydroxyl group or an ester group.

13. The binder composition according to any one of claims 1 to 12, **characterized in that** the weight-average molecular weight of the second fluoropolymer is 5,000-600,000.

14. The binder composition according to any one of claims 1 to 13, **characterized in that** the second fluoropolymer comprises one or more of polytetrafluoroethylene, polyvinylidene fluoride, poly(vinylidene fluoride-hexafluoropropylene) copolymer, poly(vinylidene fluoride-tetrafluoroethylene) copolymer, poly(vinylidene fluoride-chlorovinylidene fluoride) copolymer, and poly(vinylidene fluoride-tetrafluoroethylene-hexafluoropropylene) copolymer.

15. A preparation method of binder composition, **characterized by** comprising:
preparing a first fluoropolymer: under a polymerizable condition, subjecting a raw material containing vinylidene fluoride monomer to a first polymerization reaction to prepare the first fluoropolymer, wherein a weight-average molecular weight of the first fluoropolymer is 1,500,000-5,000,000;
preparing a second fluoropolymer: under a polymerizable condition, subjecting a raw material containing vinylidene fluoride monomer to a second polymerization reaction to prepare the second fluoropolymer, wherein a weight-average molecular weight of the second fluoropolymer does not exceed 600,000; and
blending: blending the first fluoropolymer and the second fluoropolymer to prepare a binder composition.

16. The preparation method according to claim 15, **characterized in that** the preparation method of the first fluoropolymer specifically comprises:
in a non-reactive gas atmosphere, subjecting the raw material containing vinylidene fluoride monomer to the first polymerization reaction for 6 hours to 12 hours at a reaction pressure of 6 MPa to 8 MPa and a reaction temperature of 45°C to 60°C; and
adding a chain transfer agent, and when pressure in a reaction system drops to 2 MPa to 2.5 MPa, stopping the reaction, implementing solid-liquid separation, and retaining solid phase to obtain the first fluoropolymer.

17. The preparation method according to claim 15 or 16, **characterized in that** the preparation method of the second fluoropolymer specifically comprises:
in a non-reactive gas atmosphere, subjecting at least one monomer shown in formula III to the second polymerization reaction for 0.5 hour to 8 hours at a reaction pressure of 0. 1 MPa to 5 MPa and a reaction temperature of 60°C to 90°C, stopping the reaction,
implementing solid-liquid separation, and retaining solid phase to obtain the second fluoropolymer, 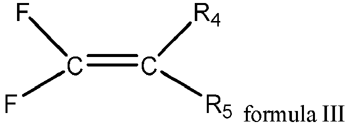
wherein R₄ and R₅ each independently comprise at least one of hydrogen, halogen, or a C₁₋₃ alkyl group containing at least one fluorine atom.

18. The preparation method according to any one of claims 15 to 17, **characterized in that** the second polymerization reaction further comprises the following steps:
adding a solvent and a dispersant into a container, and filling the container with non-reactive gas; and
adding the monomer shown in formula III, heating to 60°C to 90°C, and adding a second initiator and a chain transfer agent to trigger the second polymerization reaction.

19. The preparation method according to claim 18, **characterized in that** the second initiator contains an inorganic peroxide selected from potassium persulfate or ammonium persulfate.

20. The preparation method according to claim 18 or 19, **characterized in that** a mass percentage of the initiator is 3%-12% based on total mass of the monomer shown in formula III.

21. The preparation method of binder composition according to any one of claims 16 to 20, **characterized in that** the chain transfer agent comprises one or more of cyclohexane, isopropanol, methanol, and acetone.

22. A positive electrode plate, comprising a positive electrode current collector and a positive electrode film layer provided on at least one surface of the positive electrode current collector, wherein the positive electrode film layer comprises a positive electrode active substance, a conductive agent, and the binder composition according to any one of claims 1 to 14 or a binder composition prepared using the preparation method according to any one of claims 15 to 21.

23. The positive electrode plate according to claim 22, **characterized in that** a mass fraction of the binder composition does not exceed 1.2% based on total mass of the positive electrode film layer.

24. The positive electrode plate according to claim 22 or 23, **characterized in that** the positive electrode active substance is a lithium-containing transition metal oxide, and optionally at least one of lithium iron phosphate or lithium nickel cobalt manganese oxide, their materials modified by doping, or their modified by conductive carbon coating, modified by conductive metal coating, or modified by conductive polymer coating.

25. A secondary battery, **characterized by** comprising an electrode assembly and an electrolyte, wherein the electrode assembly comprises a separator, a negative electrode plate, and the positive electrode plate according to any one of claims 22 to 24.

26. An electric apparatus, **characterized by** comprising the secondary battery according to claim 25.
